# EUROPEAN PATENT SPECIFICATION

(11) **EP 4 287 354 B1**
(45) Date of publication and mention of the grant of the patent: **28.10.2026**
(21) Application number: 22870157.9
(22) Date of filing: 22.08.2022
(51) Int. Cl.: C22B 7/00, C01G 53/50, H01M 10/0525, H01M 10/54, H01M 4/505, H01M 4/525, H01M 4/58, H01M 10/0585, H01M 50/451

(54) **METHOD FOR RECYCLING CATHODE ACTIVE MATERIAL**
VERFAHREN ZUR WIEDERVERWERTUNG VON KATHODENAKTIVMATERIAL
PROCÉDÉ DE RECYCLAGE DE MATÉRIAU ACTIF DE CATHODE

(30) Priority: 14.09.2021 KR 20210122447
(43) Date of publication of application: 06.12.2023
(73) Proprietor: LG Energy Solution, Ltd., Seoul 07335 (KR)
(72) Inventor: KIM, Min Seo, Daejeon 34122 (KR); YANG, Doo Kyung, Daejeon 34122 (KR); PARK, Se Ho, Daejeon 34122 (KR); LEE, Jeongbae, Daejeon 34122 (KR); SEONG, Eunkyu, Daejeon 34122 (KR); SEO, Yongsik, Daejeon 34122 (KR)
(74) Representative: Hoffmann Eitle
(86) International application number: PCT/KR2022/012510
(87) International publication number: WO 2023/043071

(56) References cited:
- CN-A- 105 742 743
- CN-A- 105 870 533
- CN-A- 111 916 726
- KR-A- 20180 042 641
- KR-A- 20200 077 108
- KR-B1- 100 475 588
- KR-B1- 101 992 715
- KR-B1- 102 156 796
- US-A1- 2018 006 309
- ZHU XUESHUAI ET AL: "A novel pulsated pneumatic separation with variable-diameter structure and its application in the recycling spent lithium-ion batteries", WASTE MANAGEMENT, ELSEVIER, NEW YORK, NY, US, vol. 131, 3 June 2021 (2021-06-03), pages 20 - 30, XP086723462, ISSN: 0956-053X, [retrieved on 20210603], DOI: 10.1016/J.WASMAN.2021.05.027
- LIU ZHIFANG ET AL: "Safer Lithium-Ion Batteries from the Separator Aspect: Development and Future Perspectives", ENERGY & ENVIRONMENTAL MATERIALS, vol. 4, no. 3, 25 October 2020 (2020-10-25), pages 336 - 362, XP093273736, ISSN: 2575-0356, Retrieved from the Internet <URL:https://onlinelibrary.wiley.com/doi/full-xml/10.1002/eem2.12129> DOI: 10.1002/eem2.12129
- HANISCH CHRISTIAN ET AL: "Recycling of lithium-ion batteries: a novel method to separate coating and foil of electrodes", JOURNAL OF CLEANER PRODUCTION, vol. 108, 15 August 2015 (2015-08-15), AMSTERDAM, NL, pages 301 - 311, XP093031431, ISSN: 0959-6526, DOI: 10.1016/j.jclepro.2015.08.026
- KONG JI-ZHOU ET AL: "Enhanced electrochemical performance of Ni-rich LiNi0.6Co0.2Mn0.2O2coated by molecular layer deposition derived dual-functional C-Al2O3composite coating", JOURNAL OF ALLOYS AND COMPOUNDS, vol. 799, 30 May 2019 (2019-05-30), pages 89 - 98, XP085713252, ISSN: 0925-8388, DOI: 10.1016/J.JALLCOM.2019.05.330

## Description

### [Technical Field]

### [Cross-Reference to Related Application]

This application claims priority to Korean Patent Application No. 10-2021-0122447, filed on September 14, 2021, in the Korean Intellectual Property Office, the disclosure of which is incorporated herein by reference.

The present invention relates to a method of recycling a positive electrode active material and a recycled positive electrode active material prepared by the same which does not form part of the present invention as claimed. More particularly, the present invention relates to a method of recycling a positive electrode active material, the method being capable of greatly improving the rate performance of a battery using a recycled positive electrode active material by completely removing ceramic transferred from a separator when recovering a positive electrode from a waste battery; being capable of achieving eco-friendliness by not using acids, and thus reducing process costs by eliminating the need for neutralization and wastewater treatment processes; being capable of preventing loss of metal elements by recycling a positive electrode active material in an intact state without decomposing the positive electrode active material; being capable of recovering a current collector without dissolving the current collector with an organic solvent; being capable of preventing generation of toxic gases or explosion; and being suitable for mass production by using an easy-to-manage process such as heat treatment or compressed air jet and a recycled positive electrode active material having excellent electrochemical performance, resistance properties, and capacity properties prepared by the method.

### [Background Art]

In general, a lithium secondary battery consists of a positive electrode formed by coating a metal foil such as aluminum with a positive electrode active material layer, a negative electrode formed by coating a metal foil such as copper with a negative electrode active material layer, a separator for preventing the positive and negative electrodes from mixing, an electrolyte located between the positive and negative electrodes to allow lithium ions to flow, and the like.

In the positive electrode active material layer, a lithium-based oxide is mainly used as an active material. In the negative electrode active material layer, a carbon material is mainly used as an active material. In general, the lithium-based oxide contains a rare metal such as cobalt, nickel, or manganese. Accordingly, studies on recovery and recycling of rare metals from the positive electrodes of lithium secondary batteries that are discarded after use or positive electrode scraps (hereinafter referred to as "waste positive electrodes") generated when manufacturing lithium secondary batteries are being actively conducted.

According to the related art for recovering rare metals from a waste positive electrode, after dissolving a waste positive electrode using hydrochloric acid, sulfuric acid, or nitric acid, cobalt, manganese, nickel, etc. are extracted using an organic solvent, and then the extracted metals are used as raw materials for synthesizing a positive electrode active material.

However, in the case of the method of extracting rare metals using an acid, a neutralization process and a wastewater treatment process are necessarily required due to the problem of environmental pollution, which greatly increases process costs. In addition, lithium, which is the main metal of a positive electrode active material, cannot be recovered by the above method.

To solve these drawbacks, a method (direct recycling method) of directly recycling a positive electrode active material from a waste positive electrode without decomposing the positive electrode active material is being studied. As such a method, there are mainly four methods such as calcination, solvent dissolution, aluminum (Al) foil dissolution, and crushing & screening.

The calcination method is a simple process, but has disadvantages such as generation of foreign substances on the surface of a recycled positive electrode active material, generation of waste gas, and excessive energy consumption.

When using the solvent dissolution method, a recycled positive electrode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In the case of the aluminum foil dissolution method, process stability is good, process cost is low, and binder removal is easy. However, foreign substances that are difficult to remove are generated on the surface of a recycled positive electrode active material, and there is a risk of explosion due to hydrogen gas generated in a process of removing aluminum foil.

The crushing & screening method may be performed through the simplest process among the above methods. However, it is difficult to completely separate a current collector and a positive electrode active material, the particle size distribution of the positive electrode active material is changed during a crushing process, and the battery characteristics of the recycled positive electrode active material are deteriorated due to a residual binder.

In addition, the method (direct recycling method) of directly recycling a positive electrode active material does not provide a method of completely separating a positive electrode from a waste stack battery. In particular, in the case of a pouch-type battery, when rolling is performed in a stacking process, ceramic coated on a separator may be transferred to a positive electrode. When the transferred ceramic is not completely removed from the positive electrode and remains in a recycled positive electrode active material, the resistance of a battery increases, which deteriorates rate performance.

Therefore, there is an urgent need to develop a method capable of easily separating a positive electrode from a waste battery, improving the rate performance of a battery using a recycled positive electrode active material by completely removing ceramic transferred from a separator when separating the positive electrode, and safely recycling a positive electrode active material in an environment-friendly manner at a low cost without loss of metal elements from a waste positive electrode.

Zhu Xueshuai et al., "A novel pulsated pneumatic separation with variable-diameter structure and its application in the recycling spent lithium-ion batteries", WASTE MANAGEMENT, Vol. 131, 3 June 2021 (2021-06-03), pages 20-30, XP086723462 discloses a pneumatic separation method in the recycling of spent lithium-ion batteries.

### [Disclosure]

### [Technical Problem]

Therefore, the present invention has been made in view of the above problems, and it is one object of the present invention to provide a method of recycling a positive electrode active material, the method being capable of greatly improving the rate performance of a battery using a recycled positive electrode active material by completely removing ceramic transferred from a separator when recovering a positive electrode from a waste battery; being capable of achieving eco-friendliness by not using acids, and thus reducing process costs by eliminating the need for neutralization and wastewater treatment processes; being capable of preventing loss of metal elements by recycling a positive electrode active material in an intact state without decomposing the positive electrode active material; being capable of recovering a current collector without dissolving the current collector with an organic solvent; being capable of preventing generation of toxic gases or explosion; and being suitable for mass production by using an easy-to-manage process such as heat treatment or compressed air jet.

It is another object of the present disclosure to provide a positive electrode active material having excellent electrochemical performance, resistance properties, and capacity properties.

The above and other objects can be accomplished by the present invention described below.

### [Technical Solution]

The invention is defined in the appended claims.

### [Advantageous effects]

According to the present invention, the present invention has an effect of providing a method of recycling a positive electrode active material, the method being capable of easily separating a positive electrode from a waste battery; being capable of greatly improving the rate performance of a battery using a recycled positive electrode active material by completely removing ceramic transferred from a separator when separating the positive electrode from the waste battery; being capable of achieving eco-friendliness by not using acids, and thus reducing process costs by eliminating the need for neutralization and wastewater treatment processes; being capable of preventing loss of metal elements by recycling a positive electrode active material in an intact state without decomposing the positive electrode active material; being capable of recovering a current collector without dissolving the current collector with an organic solvent; being capable of preventing generation of toxic gases or explosion; and being suitable for mass production by using an easy-to-manage process such as heat treatment or compressed air jet and a recycled positive electrode active material having excellent electrochemical performance, resistance properties, and capacity properties prepared by the method.

### [Description of Drawings]

The following drawings attached to the present specification illustrate embodiments of the present invention, and serve to further understand the present invention together with the detailed description to be described later. Accordingly, the present invention should not be construed as being limited to the matters described in these drawings.
FIG. 1 is a flowchart for explaining a process of recovering a positive electrode according to an embodiment of the present invention.
FIG. 2 is a flowchart for explaining a process of recycling a positive electrode active material according to an embodiment of the present invention.
FIG. 3 includes images of a stack cell (a), a positive electrode before stacking (b), and the front (c) and back (d) of a positive electrode physically separated from a stack cell according to Comparative Example 1.
FIG. 4 is an image of a positive electrode of Comparative Example 1 from which a binder and a conductive material are removed by heat treatment.
FIG. 5 includes images of a stack cell (a), a stack cell immersed in acetone or a mixed solvent containing acetone and an alcohol (b), a stack cell swollen in and impregnated with acetone or a mixed solvent containing acetone and an alcohol (c), and a separated positive electrode, negative electrode, and separator (d) according to Comparative Example 2.
FIG. 6 includes images of the side of a stack & folding cell (a), the side of a cut stack & folding cell (b), the side of a cut stack & folding cell exposed to air jet (c), and a positive electrode, a negative electrode, and a separator separated after air jet (d) according to Example 1.
FIG. 7 includes images of a stack cell separated into a positive electrode, a separator, and a negative electrode by air jet after being cut in half (a), the positive electrode to which the separator is transferred, collected from the separated stack cell (b), and the negative electrode and the separator collected from the separated stack cell (c) according to Example 2.
FIG. 8 includes images of stack cells treated with acetone or a mixed solvent containing acetone and an alcohol after air jet (a, b) and stack cells treated with acetone or a mixed solvent containing acetone and an alcohol without air jet (c, d) according to Example 2 and Comparative Example 3, respectively.
FIG. 9 includes images of a stack cell (a, b), an image of electrode scraps obtained after the stack cell is cut to a size of 3 cm × 3 cm (c), and images of a positive electrode (d) and a negative electrode and separator (e) separated by jetting air onto the electrode scraps according to Example 3.
FIG. 10 is an image taken after cutting a stack cell to a size of 1 cm × 1 cm and jetting air onto the cut stack cell according to Example 4.
FIG. 11 is a graph showing rate performance depending on the number of cycles as cell evaluation results for recycled positive electrode active materials prepared in Examples 5 to 7 and Comparative Example 4 and a positive electrode active material prepared in Reference Example (Reference NCM65).

### [Best mode]

The present inventors have studied a method (direct recycling method) of directly recycling a positive electrode active material from a waste positive electrode without decomposing the positive electrode active material. During the study, the present inventors confirmed that, when a waste pouch cell or a waste bi-cell in which a separator was rolled was cut to a predetermined size, compressed air was jetted to separate and discharge a negative electrode having low specific gravity and a portion of a separator, a predetermined acetone or acetone-containing solution was added to the remaining positive electrode and separator to remove the separator and obtain the positive electrode, both the positive and negative electrodes could be recycled, and in particular, a positive electrode active material recycled from the obtained positive electrode had excellent the battery characteristics. Based on these results, the present inventors conducted further studies to complete the present invention.

Hereinafter, a method of recovering a positive electrode, a method of recycling a positive electrode active material, and a recycled positive electrode active material prepared by the method according to the present invention will be described in detail.

The terms and words which are used in the present specification and the appended claims should not be construed as being confined to common meanings or dictionary meanings but should be construed as meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations. The invention is defined in the appended claims.

Unless otherwise defined, all technical and scientific terms used in this description have the same meaning as commonly understood by those of ordinary skill in the art to which the present invention pertains.

### Method of recovering positive electrode and method of recycling positive electrode active material

A method of recovering a positive electrode and a method of recycling a positive electrode active material according to the present invention include step A of fragmenting a waste battery including a positive electrode, a separator, and a negative electrode; step B of removing the negative electrode by jetting compressed air onto waste battery scraps; and step C of treating the waste battery scraps from which the negative electrode has been removed with a solvent to remove the separator and obtain positive electrode scraps. In this case, both the positive and negative electrodes may be recycled; the positive electrode may be easily recovered from the waste battery; in particular, the rate performance of a battery using a recycled positive electrode active material may be greatly improved by removing ceramic transferred from the separator; eco-friendliness may be achieved by not using acids, and thus process costs may be reduced by eliminating the need for neutralization and wastewater treatment processes; loss of metal elements may be prevented by recycling a positive electrode active material in an intact state without decomposing the positive electrode active material; a current collector may be recovered without dissolving the current collector with an organic solvent; generation of toxic gases or explosion may be prevented; and mass production may be possible by using an easy-to-manage process such as heat treatment or compressed air jet.

### (A) Fragmenting waste battery

Step A of fragmenting a waste battery according to the present invention may be preferably a step of fragmenting a waste battery including a positive electrode, a separator, and a negative electrode.

In the present disclosure, the waste battery means an electrode for lithium secondary batteries, a bi-cell, a stack cell, or a module that has been used or cannot be used.

The separator may be preferably a ceramic-coated polymer separator. In this case, by preventing shrinkage due to heat, thermal stability and electrochemical properties may be improved.

For example, the ceramic may include a metal oxide containing one or more metal components or one or more metal compounds. As a specific example, the ceramic may include one or more selected from the group consisting of CaCO₃, Al₂O₃, SiO₂, BaTiO₃, TiO₂, Talc, ZrO, WO₃, and Al(OH)₃. When the metal oxide or the metal compound is included in a separator, shrinkage due to heat may be prevented, thereby improving thermal stability and electrochemical properties.

For example, the ceramic may have an average diameter of 0.1 to 2 µm. Within this range, by preventing shrinkage due to heat, thermal stability and electrochemical properties may be improved.

In the present disclosure, the average diameter may be measured by a measuring method commonly used in the art to which the present invention pertains. For example, the average diameter may be measured by a laser diffraction method. Specifically, positive electrode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle size distribution in the measuring device.

For example, the coating may be gravure printing coating, dip-coating, or spray coating.

For example, a method of coating the polymer separator with ceramic may be performed by coating the polymer separator with slurry containing ceramic, a binder, and water through gravure printing, dip-coating, or spray coating.

Binders commonly used in the art to which the present invention pertains may be used as the binder of the present invention. For example, the binder may include one or more selected from the group consisting of (meth)acrylate polymers, (meth)acrylate-styrene copolymers, (meth)acrylate-acrylonitrile copolymers, silicon-acrylate copolymers, epoxy compound-acrylate copolymers, polybutadiene, polyisoprene, butadiene-styrene random copolymers, isoprene-styrene copolymers, acrylonitrile-butadiene copolymers, acrylonitrile-butadiene-styrene copolymers, butadiene-styrene block copolymers, and styrene-butadiene-styrene-block copolymers.

In the present disclosure, (meth)acrylate includes both acrylate and methacrylate.

The waste battery of step A may be preferably a stack-type cell, more preferably a pouch cell. In this case, the objects and effects of the present invention may be sufficiently realized.

In the case of the pouch cell, since electrodes needs to be stacked, the positive electrode/separator/negative electrode of the electrodes are laminated at a high temperature, and ceramic coated on the separator may be transferred to the positive electrode.

In step A, since the efficiency of separating waste battery scraps may vary depending on experimental conditions or equipment, the size of the waste battery scraps is not particularly limited. For example, when the experimental conditions or equipment of the following examples are used, the waste battery scraps may have an area (width × length) of 1 cm² or more, 2 cm² or more, or 3 cm² or more or an area (width × length) of 1 m² or less, 50 cm² or less, or 10 cm² or less. Within this range, the process may be performed easily.

### (B) Removing negative electrode by jetting compressed air

Step B of removing a negative electrode by jetting compressed air according to the present invention may be preferably a step of removing a negative electrode by jetting compressed air onto waste battery scraps. In this case, both the positive and negative electrodes may be recycled, a positive electrode may be easily recovered from a waste battery, and in particular, a significant amount of ceramic transferred from a separator may be removed.

Compressed air jet may be performed using a conventional compressed air jet apparatus without particular limitation. For example, a compressed air injector, an air sprayer, an air gun, or the like may be used.

For example, compressed air jet pressure may be 0.5 bar or more or 1 bar or more, preferably 2 bar or more. In this case, a negative electrode may be separated more easily.

The jetting pressure may be adjusted according to the number, size, or state of stacks, and the upper limit thereof is not particularly limited. However, in consideration of device cost, the jetting pressure may be limited to a maximum of 100 bar per kg of waste batteries such as waste stack cells.

In step B, preferably, compressed air may be jetted onto waste electrode scraps to separate a negative electrode, and the separated negative electrode may be discharged by centrifugal force and/or difference in specific gravity. Since the specific gravity of a negative electrode is 1.2 to 3 times lower than that of a positive electrode, the negative electrode or a separator may be separated using centrifugal force or difference in specific gravity.

### (C) Removing separator and obtaining positive electrode scraps

Step C of removing a separator and obtaining positive electrode scraps according to the present invention is a step of treating waste battery scraps from which a negative electrode has been removed with a solvent to remove a separator and obtain positive electrode scraps. In this case, ceramic transferred from the separator may be removed, thereby improving the rate performance of a battery using a recycled positive electrode active material.

In step C, the solvent may be preferably a mixed solvent containing acetone and an alcohol. In this case, only transferred ceramic may be removed without elution of a positive electrode component.

The alcohol may be preferably ethanol. In this case, only transferred ceramic may be removed without elution of a positive electrode component.

The mixed solvent may have a weight ratio of acetone to the alcohol of preferably 2:8 to 8:2, more preferably 6:4 to 4:6. Within this range, only transferred ceramic may be removed without elution of a positive electrode component.

The mixed solvent may include water in an amount of preferably 5 % by weight or less, more preferably less than 5 % by weight, still more preferably 3 % by weight or less, still more preferably 2 % by weight or less. Within this range, gelation of a binder may be suppressed, and thus, gel coalescence, which makes it difficult to separate ceramic, may be fundamentally prevented.

### (D) Recovering positive electrode active material from waste positive electrode

Step D of recovering a positive electrode active material from a waste positive electrode according to the present invention may be preferably a step of recovering a positive electrode active material by heat-treating a waste positive electrode including a current collector and a positive electrode active material layer coated thereon at 300 to 650 °C in air. In this case, a binder, a conductive material, and a current collector may be completely removed by the simple process.

The positive electrode active material layer may include preferably a positive electrode active material, a binder, and a conductive material.

The positive electrode active material may include preferably one or more selected from the group consisting of a lithium cobalt oxide such as LCO; a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide, more preferably a nickel manganese-based lithium composite metal oxide, an NCM-based lithium composite transition metal oxide, or a mixture thereof. In this case, reversible capacity and thermal stability may be excellent.

As another specific example, the positive electrode active material may be a compound represented by Chemical Formula 1 below.

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, and x+y+z+w=1.

The positive electrode active material may be preferably a high-nickel (Ni) positive electrode active material containing Ni in an amount of 65 mol% or more based on a total weight of metal elements thereof.

For example, the conductive material may be a carbon-based conductive material, preferably carbon black, graphite, or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

The heat treatment temperature may be preferably 400 to 600 °C, more preferably 500 to 600 °C, still more preferably 530 to 570 °C. Within this range, since a current collector is not melted and only a binder is removed, a positive electrode active material may be easily separated from the current collector.

The heat treatment time may be preferably 10 minutes to 5 hours, more preferably 30 minutes to 5 hours, still more preferably 30 minutes to 2 hours, still more preferably 30 minutes to 1 hour. Within this range, since a current collector is not melted and only a binder is removed, a positive electrode active material may be easily separated from the current collector.

In the present disclosure, the heat treatment time is time of heat treatment performed at the heat treatment temperature, and does not include time required to reach the heat treatment temperature.

### (E) Washing with water or basic aqueous lithium compound solution

Step E of washing with water or a basic aqueous lithium compound solution according to the present invention may be preferably a step of washing a recovered positive electrode active material with a basic aqueous lithium compound solution of greater than 0 % by weight and less than or equal to 15 % by weight. In this case, the above step is a process of modifying the surface of the positive electrode active material, and, in this process, foreign substances such as LiF or metal fluorides formed on the surface of the positive electrode active material in the previous heat treatment process may be removed.

The recovered positive electrode active material may be put into the basic aqueous lithium compound solution in an amount of preferably 0.1 to 100 g, more preferably 0.1 to 50 g per 100 ml of the basic aqueous lithium compound solution, and then may be mixed with or immersed in the basic aqueous lithium compound solution for washing. Within this range, the surface of the positive electrode active material may be modified, i.e., foreign substances such as LiF or metal fluorides formed on the surface of the positive electrode active material during the previous heat treatment process may be clearly removed.

The basic aqueous lithium compound solution of step E may include a basic lithium compound preferably in an amount of greater than 0 % by weight and less than or equal to 10 % by weight, more preferably in an amount of greater than 0 % by weight and less than or equal to 5 % by weight. Within this range, the surface of the positive electrode active material may be modified, i.e., foreign substances such as LiF or metal fluorides formed on the surface of the positive electrode active material during the previous heat treatment process may be clearly removed. However, the surface of the positive electrode active material may be left coated with LiF without removing LiF from the surface thereof. In this case, the capacity of a battery may be partially reduced. However, due to LiF present on the surface of the positive electrode active material, a side reaction between the positive electrode active material and an electrolyte may be suppressed, thereby improving lifespan characteristics. Accordingly, when necessary, LiF may be kept intact. When LiF is to be removed, LiF may be removed by washing with the basic aqueous lithium compound solution as described above.

The washing may be performed preferably by stirring the recovered positive electrode active material in the basic aqueous lithium compound solution. In this case, the above step is a process of modifying the surface of the positive electrode active material, and, in this process, foreign substances such as LiF or metal fluorides formed on the surface of the positive electrode active material in the previous heat treatment process may be removed.

For example, the stirring may be performed within a week, preferably within a day, more preferably for 1 hour or less, 40 minutes or less, 30 minutes or less, or 20 minutes or less, or may be performed, for example, for 5 minutes or more, preferably 10 minutes or more, 20 minutes or more, or 30 minutes or more. Within this range, all foreign substances such as LiF or metal fluorides formed on the surface of the positive electrode active material may be removed, but excessive elution of lithium may not occur. Thus, the capacity properties of a battery may be excellent.

In step E, after mixing, immersing, or stirring, the positive electrode active material may be preferably collected and dried. In this case, a process of adding a lithium precursor may be optimized.

The drying may be performed at preferably 70 to 200 °C, more preferably 20 to 130 °C until weight does not change any more, e.g., for 1 to 24 hours. Within this range, moisture contained in a precipitated active material may be effectively removed.

### (F) Adding lithium precursor and performing annealing

Step F of adding a lithium precursor and performing annealing according to the present invention may be preferably a step of adding a lithium precursor to a washed positive electrode active material and performing annealing at 400 to 1,000 °C in air. In this case, by improving crystallinity through increase in crystallinity or recovery of a crystal structure, the battery characteristics of a recycled positive electrode active material may be improved.

The lithium precursor may include preferably one or more selected from the group consisting of LiOH, Li₂CO₃, LiNO₃, and Li₂O.

The lithium precursor may be added preferably in an amount corresponding to a difference in lithium content between a molar ratio of lithium in the positive electrode active material of step D, i.e., a fresh positive electrode active material, and a molar ratio of lithium in a precipitate with a reduced lithium content is reduced, more preferably in an amount corresponding to a molar ratio of 0.0001 to 0.2 of lithium based on a molar ratio of lithium in the positive electrode active material of step D. Within this range, insufficient lithium in the recycled positive electrode active material may be supplemented, and thus crystallinity may be increased or a crystal structure may be recovered, thereby improving crystallinity. As a result, the battery characteristics of the recycled positive electrode active material may be improved.

In the present disclosure, when a difference in the molar ratio of elements between the positive electrode active material of step D and a fresh positive electrode active material corresponding to the positive electrode active material occurs, the amount of the lithium precursor may be determined preferably based on the molar ratio of the elements of the fresh positive electrode active material.

The lithium precursor may be added preferably in an amount capable of providing 1 to 40 mol% of lithium, more preferably in an amount capable of providing 1 to 15 mol% of lithium, still more preferably in an amount capable of providing 7 to 12 mol% of lithium based on 100 mol% in total of lithium in the positive electrode active material of step D, i.e., a fresh positive electrode active material. Within this range, since a residual precursor that causes an increase in the resistance of the recycled positive electrode active material is not left, battery characteristics may be improved.

The annealing temperature may be adjusted within a limited range according to the melting point of the lithium precursor. For example, in the case of LiCO₃, the melting point thereof is 723 °C, and thus annealing may be performed at preferably 700 to 900 °C, more preferably 710 to 780 °C. In the case of LiOH, the melting point thereof is 462 °C, and thus annealing may be performed at preferably 400 to 600 °C, more preferably 450 to 480 °C. Within this range, a crystal structure may be recovered, and thus the rate performance of a battery may be excellent.

The annealing temperature is preferably a temperature exceeding the melting point of the lithium precursor. However, when the annealing temperature exceeds 1,000 °C, thermal decomposition of the positive electrode active material may occur, resulting in deterioration of battery performance.

### (F') Removing residual lithium precursor

Step F' of removing a residual lithium precursor according to the present invention is an optional step, and may be employed in the present invention when an excess of residual lithium remains. Step F' may be preferably a step of washing an annealed positive electrode active material with a cleaning solution. In this case, by removing the residual lithium precursor that did not participate in the reaction during the annealing process, solidification, swelling, or gas generation by the residual lithium precursor in a subsequent electrode manufacturing process may be fundamentally prevented.

As a specific example, when the residual lithium precursor that did not participate in the reaction during the annealing process is LiOH, the pH of slurry to be used to form a positive electrode active material layer is increased to promote solidification, thereby making it difficult to manufacture a uniform positive electrode plate. When the residual lithium precursor is Li₂CO₃, cell swelling is promoted, which reduces a cycle lifespan and causes battery swelling.

Step F' of removing a residual lithium precursor may preferably include a step of washing the annealed positive electrode active material with a cleaning solution and a step of heat-treating the washed positive electrode active material. In this case, the residual lithium precursor may be removed, the surface area of the positive electrode active material may be increased, and resistance may be reduced, thereby increasing discharge capacity.

Step F' of removing a residual lithium precursor may preferably include a step of washing the annealed positive electrode active material with a cleaning solution, a step of drying the washed positive electrode active material, and a step of heat-treating the dried positive electrode active material. In this case, the residual lithium precursor may be removed, the surface area of the positive electrode active material may be increased, and resistance may be reduced, thereby increasing discharge capacity.

Cleaning solutions for removing residual lithium precursors such as LiOH and Li₂CO₃ commonly used in the art to which the present invention pertains may be used as the cleaning solution of the present invention without particular limitation. For example, distilled water may be used as the cleaning solution.

For example, the washing may be performed by adding the annealed positive electrode active material to the cleaning solution in an amount of 5 g to 2 kg, preferably 10 g to 1 kg, more preferably 20 g to 100 g per 1 L of the cleaning solution and performing stirring and filtration. Within this range, the residual lithium precursor may be removed, the surface area of the positive electrode active material may be increased, and resistance may be reduced, thereby increasing discharge capacity.

As another example, when the washing is performed, the weight ratio of the annealed positive electrode active material to the cleaning solution may be 1:0.5 to 1:5, as a preferred example, 1:0.5 to 1:2. In this case, washing may be performed efficiently.

For example, the washing may be performed for 0.1 to 72 hours, preferably within 24 hours. In this case, the residual lithium precursor may be removed, the surface area of the positive electrode active material may be increased, and resistance may be reduced, thereby increasing discharge capacity.

In the present disclosure, the washing time is defined as time from immediately after mixing to before filtering, as a specific example, time required for mixing and/or stirring.

For example, the drying may be performed at 50 to 200 °C under vacuum, preferably at 70 to 130 °C under vacuum. Within this range, the residual lithium precursor may be removed, the surface area of the positive electrode active material may be increased, and resistance may be reduced, thereby increasing discharge capacity.

For example, the heat treatment may be performed at 200 to 900 °C for 2 to 24 hours, preferably at 700 to 800 °C for 2 to 15 hours in air or under oxygen (O₂) atmosphere. Within this range, the residual lithium precursor may be removed, the surface area of the positive electrode active material may be increased, and resistance may be reduced, thereby increasing discharge capacity.

### (G) Performing coating using coating agent and performing heat treatment

Step G of coating using a coating agent and performing heat treatment according to the present invention is an optional step, and may be preferably a step of coating the annealed positive electrode active material of step F or F' with a coating agent containing metals or carbon, and then heat-treating the positive electrode active material at 200 to 1,000 °C. In this case, since side reaction by an electrolytic solution is suppressed, structural stability and electrochemical performance may be improved while maintaining the intrinsic properties of the positive electrode active material.

The coating agent containing metals may be preferably a coating agent containing one or more selected from the group consisting of B, W, Al, Ti, Mg, Ni, Co, Mn, Si, Zr, Ge, Sn, Cr, Fe, V, and Y, more preferably a coating agent containing one or more selected from the group consisting of B, W, Al, Ti, and Mg. In this case, metals other than lithium lost through a process of separating a current collector and a process of modifying the surface of a positive electrode active material may be replenished or a surface coating layer may be restored.

The heat treatment temperature may be preferably 200 to 900 °C, more preferably 200 to 700 °C, still more preferably 200 to 500 °C. Within this range, performance degradation due to thermal decomposition of the positive electrode active material does not occur. In addition, since side reaction by an electrolytic solution is suppressed, structural stability and electrochemical performance may be improved while maintaining the intrinsic properties of the positive electrode active material.

As a specific example, when the coating agent contains B, B-W, B-Ti, or B-W-Ti, the heat treatment temperature may be preferably 200 to 500 °C.

Based on 100 parts by weight in total of the positive electrode active material, the coating agent may be included in an amount of preferably 0.01 to 10 parts by weight, more preferably 0.1 to 1 part by weight. Within this range, structural stability and electrochemical performance may be improved while maintaining the intrinsic properties of the positive electrode active material.

The heat treatment time may be preferably 1 to 16 hours, more preferably 3 to 7 hours. Within this range, structural stability and electrochemical performance may be improved while maintaining the intrinsic properties of the positive electrode active material.

Coating methods commonly used in the art to which the present invention pertains may be used as the coating method of the present invention without particular limitation. For example, a liquid method of mixing a positive electrode active material and a liquid coating agent, a mechanochemical method using the high mechanical energy of ball milling, a fluid bed coating method, a spray drying method, a precipitation method of precipitating a coating agent onto the surface of an active material in an aqueous solution, a method using reaction between a vapor phase coating agent and a positive electrode active material, or sputtering may be used.

For example, the coating agent may have a spherical shape, a plate shape, a square shape, or a needle shape. For example, such a shape may be controlled by changing process conditions in the preparation process of the coating agent. The shape of the coating agent is not particularly limited as long as the shape follows a definition commonly accepted in the art to which the present invention pertains.

The coating agent may have preferably an average diameter of 1 to 1,000 nm and a specific surface area of 10 to 100 m²/g, more preferably an average diameter of 10 to 100 nm and a specific surface area of 20 to 100 m²/g. Within this range, the coating agent may be uniformly adhered to the surface of the positive electrode active material, thereby improving the structural stability of the positive electrode active material. Thus, reduction of the lifespan of the positive electrode active material and degradation of the electrochemical performance thereof due to lattice deformation or collapse of a crystal structure may be prevented.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated from the amount of nitrogen gas adsorbed at a liquid nitrogen temperature (77 K) using BELSORP-mino II manufactured by BEL Japan Co.

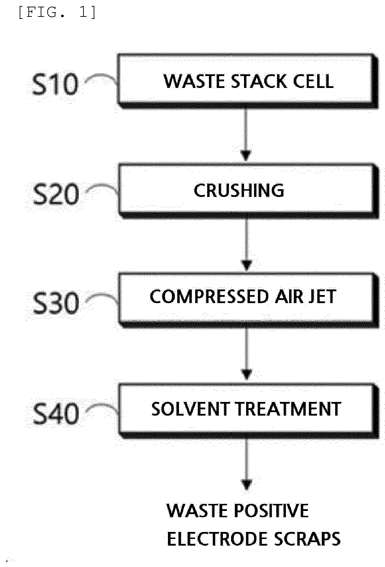

FIG. 1 below is a flowchart for explaining a process of recovering a positive electrode according to an embodiment of the present invention.

Referring to FIG. 1, first, a waste stack cell used as a lithium secondary battery is prepared (step S10). Here, the waste stack cell includes a high-nickel (Ni) positive electrode active material containing Ni in an amount of 65 mol% or more and a ceramic-coated polymer separator.

Next, the prepared waste stack cell is crushed into appropriately sized scraps (step S20). Here, crushing includes cutting or shredding the waste stack cell into scraps having a size that is easy to separate using compressed air and easy to handle. As a specific example, crushed waste stack cell scraps may have a size of about 3 cm × 3 cm. For example, the crushing may be performed using various dry crushing equipment such as a hand-mill, a pinmill, a disk-mill, a cutting-mill, and a hammer-mill. In addition, to increase productivity, the crushing may be performed using a high-speed cutter.

Next, by jetting compressed air onto the waste stack cell scraps, the negative electrode and a portion of the separator are removed (step S30). At this time, the negative electrode and separator having a low specific gravity are discharged from a separation vessel to the outside, and only the positive electrode having a high specific gravity remains in the separation vessel. In this case, the specific gravity of the positive electrode is 2 to 3 times greater than that of the negative electrode.

Next, the waste stack cell scraps from which the negative electrode and a portion of the separator have been removed are immersed in a mixed solvent containing acetone and ethanol, followed by stirring for 10 to 30 minutes to separate a supernatant including the separator. Then, the separator-containing supernatant is removed to obtain clear waste positive electrode scraps.

In the case of a stack cell, during a separator bonding process, a separator is laminated on a positive electrode at high temperature. Accordingly, ceramic present in the separator may be transferred to the positive electrode. When the positive electrode to which the separator is attached is crushed, and a current collector is separated, ceramic content is increased. To overcome this problem, when a stack cell is immersed in acetone or an acetone-containing solution (hereinafter referred to as "acetone solution") according to the present invention, ceramic transferred to the positive electrode may also be removed, and thus a clear positive electrode may be obtained.

When a positive electrode active material is recycled, the charge/discharge capacity expression rate of a recycled positive electrode active material is affected by the presence or absence of a ceramic removal process. By removing ceramic through the immersion process using the acetone solution according to the present invention, the capacity expression rate of a recycled positive electrode active material may be greatly improved. Here, the types of ceramic used for separator coating are not limited.

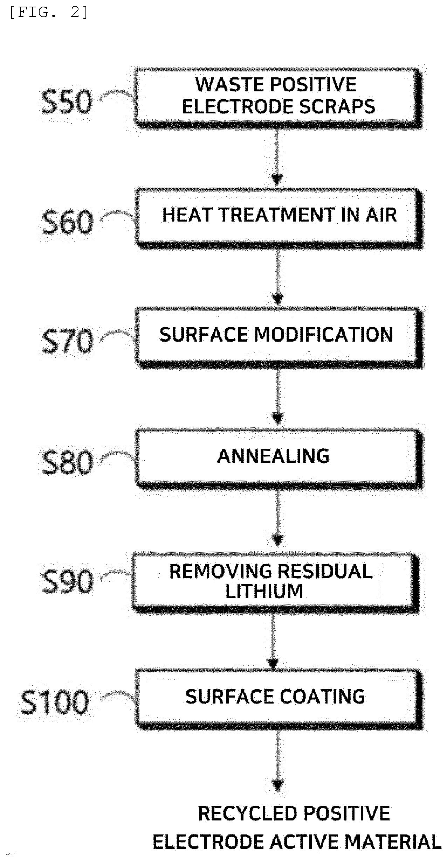

FIG. 2 below is a flowchart for explaining a process of recycling a positive electrode active material according to an embodiment of the present invention.

Referring to FIG. 2, first, the waste positive electrode scraps obtained in the previous step are prepared (step S50). For example, slurry is obtained by adding N-methyl pyrrolidone (NMP) to an NCM-based lithium composite transition metal oxide, carbon black, and polyvinylidene fluoride and mixing these components. Then, aluminum foil is coated with the slurry and dried in a vacuum oven at about 120 °C to manufacture a fresh positive electrode.

In the waste positive electrode scraps, a positive electrode active material layer is formed on aluminum foil. After a solvent is volatilized, the positive electrode active material layer has a structure in which a positive electrode active material and a conductive material are bonded by a binder. Accordingly, when the binder is removed, the positive electrode active material may be separated from the aluminum foil.

For example, in consideration of equipment used in handling waste positive electrode scraps and subsequent processes, whether to perform the crushing, the size of the scraps, etc. may be determined. For example, when equipment capable of continuous processing is used, since high fluidity is required, waste positive electrode scraps must be crushed into small scraps.

Next, the waste positive electrode scraps are heat-treated in air (step S60). Here, the heat treatment is performed to thermally decompose a binder in an active material layer.

Through the heat treatment in air, the binder and the conductive material in the active material layer are thermally decomposed into CO₂ and H₂O and removed. Since the binder is removed, the active material may be separated from a current collector, and the separated active material in powder form may be easily selected. Accordingly, in step S60, the active material layer may be separated from the current collector, and the active material in the active material layer may be recovered in powder form.

The heat treatment should be performed in air. When the heat treatment is performed under a reducing gas or inert gas atmosphere, the binder and the conductive material are carbonized without being thermally decomposed. In this case, carbon components remain on the surface of the active material, and the performance of a recycled active material is deteriorated. However, when the heat treatment is performed in air, carbon components in the binder and the conductive material react with oxygen to generate gases such as CO and CO₂ and disappear. Thus, the binder and the conductive material may be completely removed.

The heat treatment is performed at preferably 300 to 650 °C, as a specific example, 550 °C. When the heat treatment is performed at a temperature of less than 300 °C, it is difficult to remove the binder, so the current collector may not be separated. When the heat treatment is performed at a temperature of exceeding 650 °C, since the current collector melts, the current collector may not be separated.

The heat treatment is performed at a temperature increasing rate of preferably 1 to 20 °C/min, more preferably 3 to 10 °C/min, as a specific example, 5 °C/min. Within this range, heat treatment may be performed without applying excessive force to heat treatment equipment, and application of thermal shock to positive electrode scraps may be prevented.

For example, the heat treatment may be performed for a time sufficient to thermally decompose the binder, preferably for 30 minutes or more, more preferably 30 minutes to 5 hours, as a specific example, within 30 minutes. Within this range, the binder may be sufficiently thermally decomposed, and thermal decomposition efficiency may be excellent.

The heat treatment may be performed using various types of furnaces, e.g., a box-type furnace. In addition, in consideration of productivity, the heat treatment may be performed using a rotary kiln capable of continuous treatment.

After the heat treatment, slow cooling or rapid cooling may be performed in the atmosphere.

Next, as a surface modification step, the recovered active material is washed (step S70).

In the washing process, reactants generated on the surface of the active material during the heat treatment step (step S60) are removed, thereby removing foreign substances from the surface of the recycled active material.

When performing the washing, it is important to use a basic aqueous lithium compound solution. When an aqueous sulfuric acid or hydrochloric acid solution is used, foreign substances such as fluorine (F) compounds present on the surface of the positive electrode active material may be removed. However, since transition metals such as Co and Mg present in the positive electrode active material are eluted, the performance of the recycled positive electrode active material may be deteriorated.

However, the basic aqueous lithium compound solution is safe and inexpensive, and may remove a trace amount of a binder that may remain after the thermal decomposition of step S60 without loss of other elements. In addition, the basic aqueous lithium compound solution does not elute transition metals present in the positive electrode active material, and may supplement lithium that may be eluted during the washing process. Accordingly, the use of the basic aqueous lithium compound solution is highly desirable.

For example, the basic aqueous lithium compound solution contains a basic lithium compound in an amount of greater than 0 % and less than or equal to 15 %. When the basic aqueous lithium compound solution containing the basic lithium compound in a concentration exceeding the above range is used, an excess of the lithium compound may remain on the surface of the active material after washing, which adversely affects the subsequent annealing process.

As a specific example, the washing may be performed by adding the recovered positive electrode active material to the basic aqueous lithium compound solution in an amount of 1 to 5 g per 100 ml of the basic aqueous lithium compound solution and performing immersion or stirring. Here, the stirring method is not particularly limited and may be mechanical or ultrasonic stirring.

The lithium compound may be preferably LiOH.

In the present disclosure, unless otherwise defined, % means % by weight.

As a specific example, the washing is performed for 10 to 20 minutes. Within this range, decrease in the capacity of a battery due to excessive elution of lithium may be prevented.

In the present disclosure, the reason for washing the recovered positive electrode active material with the basic aqueous lithium compound solution is to remove LiF and metal fluorides that may exist on the surface of the recovered positive electrode active material, that is, to perform surface modification. During the heat treatment of step S60, the binder and the conductive material in the active material layer are converted to CO₂ and H₂O, and are vaporized and removed. In this process, CO₂ and H₂O may react with lithium on the surface of the active material to form Li₂CO₃ and LiOH, and F present in the binder, such as PVdF, may react with lithium or other metal elements constituting the positive electrode active material to form LiF or metal fluorides. When LiF or the metal fluorides remain on the surface of the positive electrode active material, battery characteristics deteriorate when reused.

After the washing, the positive electrode active material slurry may be filtered, or the supernatant may be discarded to obtain a solid positive electrode active material.

As a specific example, the obtained positive electrode active material is dried using a convection-type oven in air.

Next, a lithium precursor is added to the dried positive electrode active material, and annealing is performed (step S80).

Loss of lithium in the positive electrode active material occurs during preceding steps S50, S60, and S70. In step S80, the loss amount of lithium is supplemented. In addition, during the preceding steps, a deformed structure (e.g., Co₃O₄ in the case of an LCO active material) may be formed on the surface of the positive electrode active material. In step S80, the crystal structure of the positive electrode active material may be recovered through annealing, thereby improving the properties of a recycled positive electrode active material, or restoring the properties of the recycled positive electrode active material to the level of properties of a fresh positive electrode active material. Here, "fresh" is a concept opposite to "recycling", a fresh material means that the material was made for the first time, and the fresh material is the same word as "raw material" used in the examples.

As a specific example, LiOH is used as the lithium precursor.

Based on the molar ratio of lithium to other metals in a fresh positive electrode active material used in the positive electrode active material layer, the lithium precursor is preferably added in an amount corresponding to the lost lithium molar ratio. When an excess of lithium precursor is added relative to the amount of lithium lost, an unreacted lithium precursor may remain in a recycled positive electrode active material, which increases resistance. Accordingly, an appropriate amount of the lithium precursor needs to be added. For example, when the molar ratio of lithium to other metals in a fresh positive electrode active material is 1, the lithium precursor may be added in an amount such that lithium is in a molar ratio of 0.001 to 0.4, preferably an amount such that lithium is in a molar ratio of 0.01 to 0.2.

As a specific example, when the lithium precursor is added at a molar ratio of 0.09 to 0.1 (based on lithium metal), which is a ratio lost compared to a lithium content in a fresh positive electrode active material, based on ICP analysis results, the capacity may be increased to a level equivalent to that of the fresh positive electrode active material. Here, the ICP analysis results have an error value of about ±0.02.

For example, the annealing may be performed in air at 400 to 1,000 °C, preferably at 600 to 900 °C. In this case, the temperature should be determined within a limited range according to the type of the lithium precursor.

The annealing temperature is preferably a temperature exceeding the melting point of the lithium precursor. However, since performance degradation occurs due to thermal decomposition of the positive electrode active material at a temperature exceeding 1,000 °C, the annealing temperature should not exceed 1,000 °C. When Li₂CO₃ is used as the lithium precursor, the annealing temperature is preferably 700 to 900 °C, more preferably 710 to 780°C, most preferably 750 to 780 °C. In addition, when LiOH is used as the lithium precursor, the annealing temperature is preferably 400 to 600 °C, more preferably 450 to 480 °C, most preferably 470 to 480 °C.

For example, the annealing time is preferably 1 to 15 hours, more preferably 4 to 6 hours. When the annealing time is increased, a crystal structure may be sufficiently recovered, but even long-term annealing does not significantly affect performance. In this case, the same or similar equipment as in step S60 of performing heat treatment may be used as the annealing equipment.

The annealing step is safe and inexpensive, and restores the battery characteristics of the recycled positive electrode active material by restoring the crystal structure thereof, i.e., improving the crystallinity thereof.

The recycled positive electrode active material obtained through the steps of recycling a positive electrode active material described above has a particle size distribution similar that of a fresh positive electrode active material, and carbon components generated by carbonization of a binder or a conductive material do not remain on the surface of the recycled positive electrode active material. Thus, the recycled positive electrode active material may be used alone without additional treatment or mixed with a fresh active material to manufacture a positive electrode.

Next, as an optional step, the annealed positive electrode active material is washed with a cleaning solution to remove the lithium precursor remaining on the surface of the positive electrode active material (step S90).

Next, as an optional step, the surface of the annealed positive electrode active material may be coated (S100).

For example, in the surface coating, the surface is coated with a coating agent containing metals or carbon in a solid or liquid phase and heat-treated at 100 to 1,200 °C. When the heat treatment temperature is less than 100 °C, formation of a surface protection layer by the dissimilar metals may not occur. When the heat treatment temperature exceeds 1,200 °C, due to thermal decomposition of the positive electrode active material, battery performance may deteriorate.

Specifically, when the positive electrode active material is coated with a metal oxide such as B, W, and B-W and heat-treated, a lithium boron oxide layer may be formed on the surface of the active material, and this layer acts as a surface protection layer.

The surface coating may be performed using a solid-phase or liquid-phase method, as a specific example, mixing, milling, spray drying, or grinding.

For reference, when the molar ratio of lithium to other metals in the positive electrode active material in the previous annealing step S80 is 1:1, lithium in the positive electrode active material reacts with the coating agent, and the molar ratio of lithium to other metal in the positive electrode active material is less than 1:1. In this case, the capacity of a battery may not be fully expressed. Accordingly, to replenish lithium depleted in step S80, lithium is added so that the molar ratio of lithium to other metals in the positive electrode active material is 1:1. In addition, an excess of lithium is added so that lithium is contained in a greater molar ratio of 0.0001 to 0.1 compared to other metals in the positive electrode active material. Then, in the surface coating of step S100, the molar ratio of lithium to other metals in the positive electrode active material becomes 1:1, and furthermore, a surface protective layer is formed.

Specifically, in step S80, lithium added in an excess amount of about 0.0001 to 0.1 molar ratio reacts with metal oxides such as B, W, and B-W in step S100. In this case, the molar ratio of lithium to other metals in the positive electrode active material does not decrease, showing a molar ratio of 1:1 less than, so that no capacity degradation occurs.

### Recycled positive electrode active material (not part of the present invention as claimed)

A recycled positive electrode active material of the present disclosure is prepared by the method of recycling a positive electrode active material described above. In this case, ceramic may be removed from the recycled positive electrode active material, thereby greatly improving the rate performance of a battery.

In addition, the recycled positive electrode active material of the present disclosure includes preferably one or more selected from the group consisting of a lithium cobalt oxide such as LCO; a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. The recycled positive electrode active material includes Al₂O₃ in a concentration of 1 to 10,000 ppm, and the surface thereof is coated with a coating agent containing metals or carbon. In this case, electrochemical performance, resistance properties, and capacity properties may be excellent.

As a more specific example, the recycled positive electrode active material includes a compound represented by Chemical Formula 1 below.

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, and x+y+z+w=1. The recycled positive electrode active material incudes Al₂O₃ in a concentration of 1 to 10,000 ppm, and the surface thereof is coated with a coating agent containing metals or carbon. In this case, electrochemical performance, resistance properties, and capacity properties may be excellent.

The recycled positive electrode active material may include Al₂O₃ in an amount of preferably 1 to 4,000 ppm, more preferably 1 to 3,000 ppm. Within this range, long-term cycle characteristics and physical property balance may be excellent.

The recycled positive electrode active material may be preferably a high-nickel (Ni) positive electrode active material including Ni in an amount of 65 mol% or more based on a total weight of metal elements thereof.

The content of fluorine (F) may be 5,000 ppm or less, preferably 500 ppm or less, more preferably 100 ppm or less, still more preferably 30 ppm or less. Within this range, excellent resistance properties and capacity properties may be implemented.

The recycled positive electrode active material may be preferably coated with a coating agent containing metals or carbon. In this case, without change in the chemical and physical properties of the positive electrode active material, the structural stability of the positive electrode active material may be improved, thereby improving electrochemical properties such as rate performance, lifespan characteristics, and capacity. In addition, substitution with heterogeneous elements occurs on the surface of the positive electrode active material, so that the amount of residual lithium is reduced and the pH is reduced, thereby improving physicochemical properties.

Description of the recycled positive electrode active material of the present disclosure may include all of the description of the method of recycling a positive electrode active material described above, and thus repeated description is omitted in this specification.

Hereinafter, the present invention will be described in more detail with reference to the following preferred examples. However, these examples are provided for illustrative purposes only and should not be construed as limiting the scope of the present invention. In addition, it will be apparent to those skilled in the art that various changes and modifications may be made without departing from the invention as claimed.

### [Examples]

In the following examples, a waste stack cell having a size of 28 cm × 10 cm (horizontal × vertical) in which a positive electrode obtained by coating aluminum foil with an NCM-based lithium composite transition metal oxide; a separator coated with a PVdF-based binder and containing Al₂O₃; and a negative electrode made of graphite were rolled was used.

### Comparative Example 1

### <Process of recovering positive electrode>

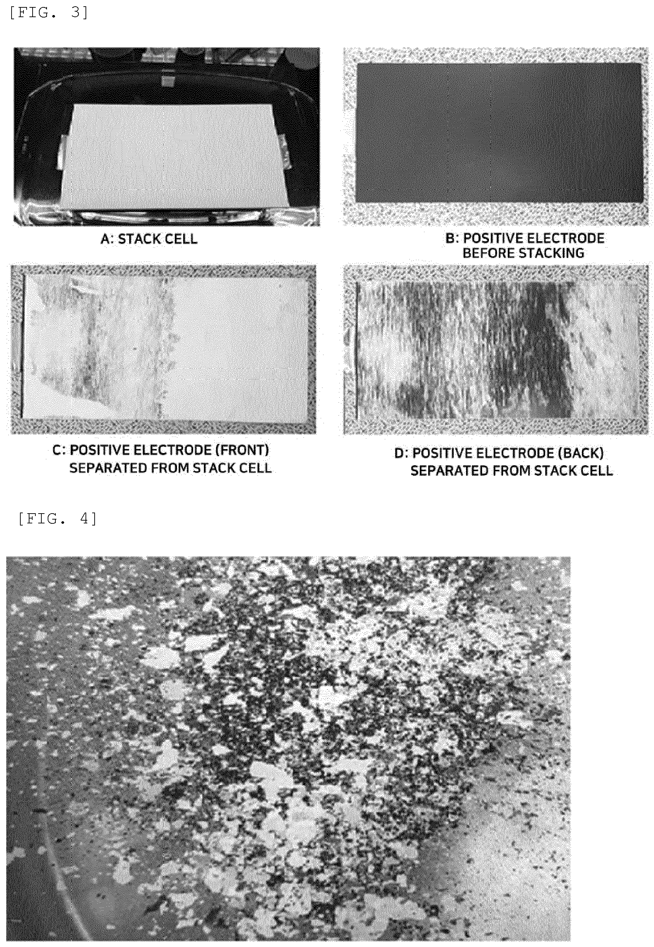

The positive electrode of a waste stack cell was removed by hand and recovered (see FIG. 3 below).

### <Process of recycling positive electrode active material>

The recovered positive electrode was heat-treated at 550 °C for 30 minutes in air to remove a binder and a conductive material (see FIG. 4 below). At this time, temperature was increased to the heat treatment temperature at a temperature increasing rate of 5 °C/min.

### Comparative Example 2

### <Process of recovering positive electrode>

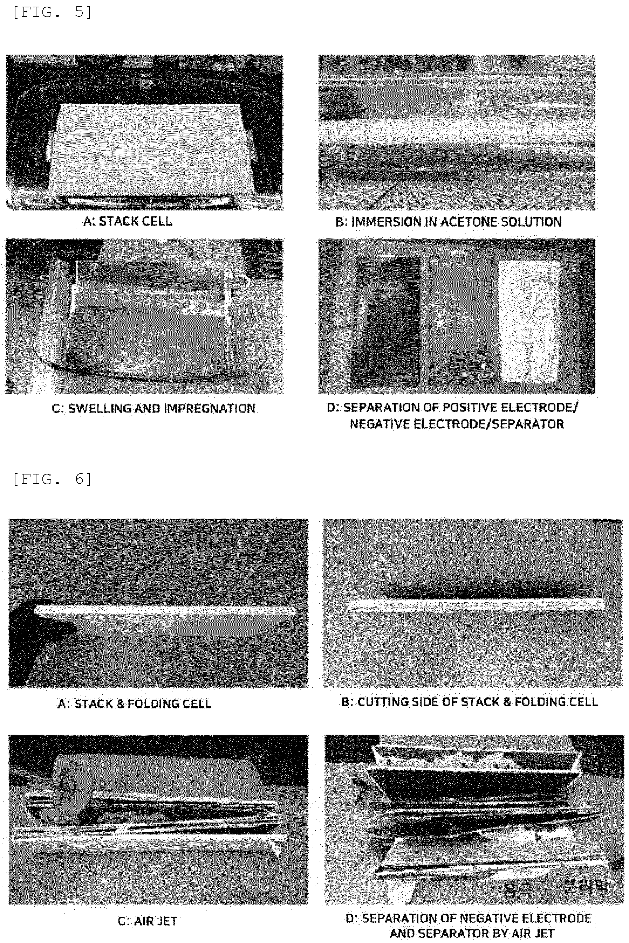

Without cutting, the waste stack cell is immersed in acetone or a mixed solvent containing acetone and an alcohol for 60 minutes for swelling and impregnation, and then a positive electrode, a negative electrode, and a separator were separated (see FIG. 5 below).

### Comparative Example 3

### <Process of recovering positive electrode>

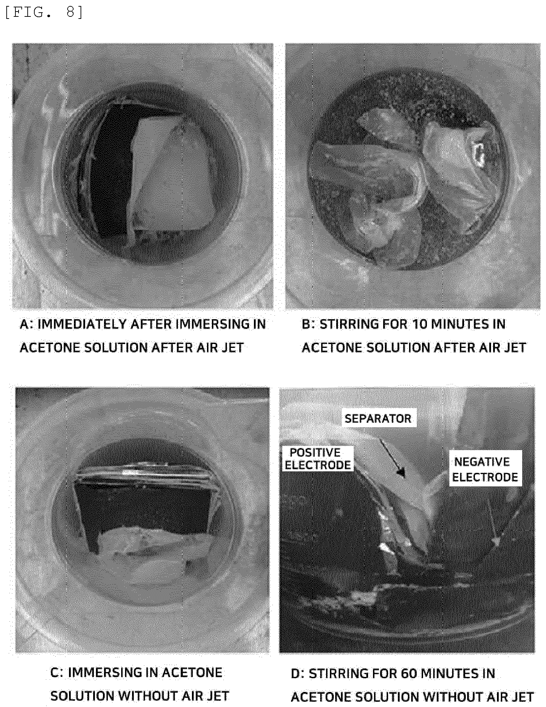

After cutting a waste stack cell in half, without a process of jetting compressed air, the cut waste stack cell was immediately put in acetone or a mixed solvent containing acetone and an alcohol, followed by stirring for 60 minutes to separate a positive electrode, a negative electrode, and a separator (see FIGS. 8C and 8D below).

### Example 1

### <Process of recovering positive electrode>

After cutting the side of a waste stack cell, compressed air was jetted onto the cut waste stack cell to separate a negative electrode and a portion of a separator from a positive electrode, and then only the positive electrode was collected (see FIG. 6 below). The collected positive electrode was put into acetone or a mixed solvent containing acetone and an alcohol, followed by stirring for 10 minutes to recover a clear positive electrode from which the separate and ceramic had been removed.

### Example 2

### <Process of recovering positive electrode>

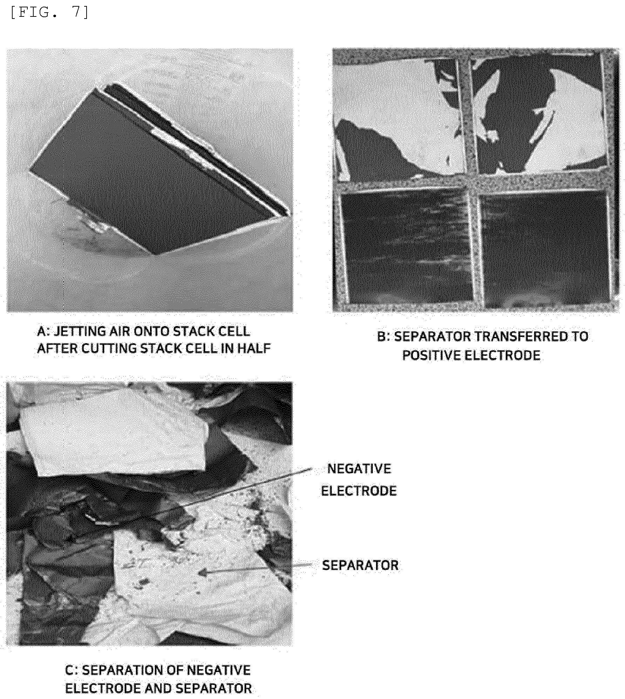

A positive electrode was recovered in the same manner as in Example 1, except that a waste stack cell was cut in half (see FIGS. 7, 8A, and 8B below).

### Example 3

### <Process of recovering positive electrode>

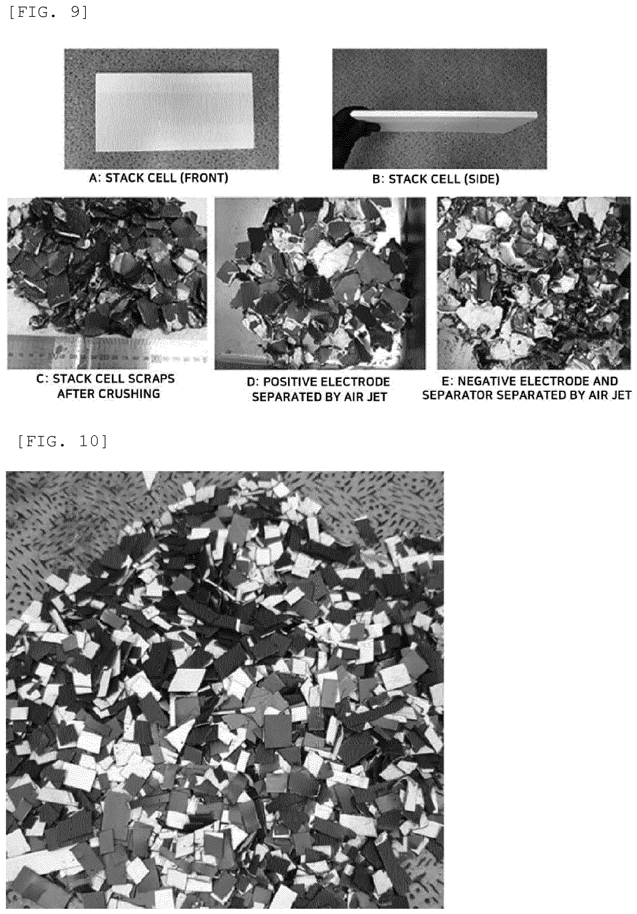

As shown in FIG. 9 below, a stack cell was cut to a size of about 3 cm × 3 cm, compressed air was jetted onto the scraps to separate a positive electrode, a negative electrode, and a separator, and the positive electrode was recovered by difference in specific gravity. At this time, by jetting compressed air for 10 minutes, more than 90 % of the negative electrode was separated out of a total of 300 g of waste battery scraps, and a portion of the separator was separated.

The recovered positive electrode scraps were put into acetone or a mixed solvent containing acetone and an alcohol, followed by stirring for 30 minutes. After stirring, a supernatant containing the separator was discarded to obtain positive electrode scraps, and then the obtained positive electrode scraps were dried at 100 °C for 10 hours to recover a positive electrode as a final product.

### Example 4

### <Process of recovering positive electrode>

A positive electrode was recovered in the same manner as in Example 3, except that a stack cell was cut to a size of about 1 cm × 1 cm. Note that, due to the small size of stack cell scraps, compared to Example 3, the stack cell was not completely separated into a positive electrode, a negative electrode, and a separator. It was presumed that the separation was not performed properly because resistance applied to the stack cell scraps by compressed air was small. However, this problem may be overcome by changing equipment or conditions.

### Example 5

### <Process of recycling positive electrode active material>

The positive electrode scraps dried in Example 3 were crushed to a size of about 1 cm², and the crushed scraps were heat-treated at 550 °C for 30 minutes in air to remove a binder and a conductive material and separate a current collector and a positive electrode active material. Through these processes, the positive electrode active material was recovered. At this time, temperature was increased to the heat treatment temperature at a temperature increasing rate of 5 °C/min.

To remove foreign substances such as LiF and metal fluorides present on the surface thereof, 15 g of the recovered positive electrode active material was immersed in 450 ml of an aqueous LiOH solution having a concentration of 0.1 % by weight, and stirring was performed for 10 minutes for washing. After the washing, positive electrode active material slurry was filtered to obtain the washed positive electrode active material. The obtained positive electrode active material was dried at 100 °C for 12 hours.

LiOH as a lithium precursor was added to the dried positive electrode active material in an amount capable of providing lithium (0.09 mol) that satisfied the molar ratio of lithium to other metals in a positive electrode active material as a raw material (same molar ratio as in Comparative Example 1), and annealing was performed at 750 °C for 5 hours in air to obtain a recycled positive electrode active material. At this time, the molar ratio of lithium to other metals in the positive electrode active material was measured by ICP analysis.

Note that, the recycled positive electrode active material of Comparative Example 1 was obtained from a reference active material (NCM651520). According to the results of ICP analysis thereof, when the molar ratio of lithium to other metals was 1.05, during recycling, lithium was reduced by a molar ratio of about 0.1 through a washing process. However, since there was an error in the IPC analysis, in Examples, the amount of lithium added was adjusted to a molar ratio of 0.09 to 0.11. There was no change in the composition of other metals except lithium.

Lithium was added, and annealing was performed at high temperature. Then, surface passivation was performed by coating with B or W.

In the case of a waste electrode using an active material containing a high content of Ni (80 mol% or more), after the process of adding lithium (annealing process), a secondary washing process (water : positive electrode active material = 0.5:1 to 2:1 in weight ratio) for removing residual lithium may be performed.

### Examples 6 and 7

A positive electrode active material was recycled in the same manner as in Example 5, except that, in <Process of recycling positive electrode active material> of Example 5, when performing annealing, LiOH was used at concentrations of 0.10 mol and 0.11 mol, respectively.

### Comparative Example 4

A positive electrode active material was recycled in the same manner as in Example 5, except that, in <Process of recycling positive electrode active material> of Example 5, a step of treating stack cell scraps with acetone or a mixed solvent containing acetone and an alcohol was omitted, and LiOH was used at a concentration of 0.10 mol when performing annealing.

### Reference Example

Instead of a recycled active material, a fresh NCM-based lithium composite transition metal oxide (NCM651520) was used.

### [Test Examples]

The properties of the positive electrodes and the recycled positive electrode active materials obtained in Examples 1 to 7, Comparative Examples 1 to 4, and Reference Example were measured according to the following methods, and the results are shown in Table 1 and FIGS. 3 to 11 below.
* ICP analysis: Using an ICP analysis apparatus, a residual amount of LiF, a content of Al₂O₃, a ratio of lithium to other metals in an active material, and a content (mg/kg) of a specific element such as F were measured. In this case, a general ICP analyzer frequently used in laboratories may be used. However, there was no deviation according to the measuring device or method.
* Evaluation of cell: 96 % by weight of a recycled or fresh positive electrode active material, 2 % by weight of carbon black as a conductive material, and 2 % by weight of PVdF as a binder were prepared and mixed in an NMP to obtain slurry, and aluminum foil was coated with the slurry to manufacture a positive electrode. Using the manufactured positive electrode and 80 µl of a solution as an electrolyte (EVPS) obtained by mixing ethylene carbonate (EC) and ethyl methyl carbonate (EMC) in a volume ratio of 3:7, a cell (coin half-cell, CHC) was manufactured, and the electrochemical performance thereof was evaluated at a voltage of 3 to 4.3V cut and a formation charge/discharge of 0.1 C/1.0 C (specific charge/discharge condition: -0.1 C/0.1 C-0.33 C/0.33 C-0.5 C/0.1 C-0.5 C/1 C-0.5 C/2 C).

**[Table 1]**

| Classification | Reference Example | Example 5 | Example 6 | Example 7 | Comparative Example 4 |
|---|---|---|---|---|---|
| LiOH | - | 0.09 mol | 0.10 mol | 0.11 mol | 0.10 mol |
| 0.1 C charge | 201.71 | 197.86 | 198.08 | 198.96 | 193.4 |
| 0.1 C discharge | 183.50 | 178.54 | 179.15 | 179.00 | 172.42 |
| Efficiency | 90.97 | 90.23 | 90.44 | 89.96 | 89.15 |
| Nor. (%) compared to Reference Example | 100 | 97.29 | 97.62 | 97.54 | 93.96 |
| Al₂O₃ content (mg/kg) | 0 | 3,000 | 3,000 | 3,000 | 5,000 |
| LiF content (mg/kg) | 400 | 400 | 400 | 400 | 400 |

| | | | | | |
|---|---|---|---|---|---|
| * Nor. is an abbreviation for normalization. | | | | | |

As shown in Table 1, compared to Comparative Example 4 without the solvent treatment process according to the present invention, the recycled positive electrode active materials (Examples 5 to 7) according to the present invention have excellent charge/discharge capacity and efficiency, i.e., have charge/discharge capacity and efficiency similar to those of the fresh positive electrode active material (Reference Example).

FIG. 3 below includes images of a stack cell (a), a positive electrode before stacking (b), and the front (c) and back (d) of a positive electrode manually separated from a stack cell according to Comparative Example 1. Here, it can be confirmed that ceramic coated on a separator is transferred to an entire positive electrode. In general, a separator is a fabric made of a polymer, and to prevent shrinkage due to heat, separator fabric is coated with ceramic having a nanometer-scale size (tens to hundreds of nanometers). Since the ceramic is pressurized during a lamination process in which a separator and a positive electrode are combined, when the positive electrode is physically separated, the ceramic is transferred to the surface of the positive electrode.

FIG. 4 below is an image of a positive electrode of Comparative Example 1 from which a binder and a conductive material are removed by heat treatment. Here, it can be seen that an active material (black) separated from a current collector and ceramic (white) are mixed. Even when this mixture is filtered through a 325 mesh sieve, it is impossible to separate the active material and the ceramic because ceramic having a size of several hundred nanometers is also filtered out.

FIG. 5 below includes images of a stack cell (a), a stack cell immersed in an acetone solution (b), a stack cell swollen in and impregnated with an acetone solution (c), and a separated positive electrode, negative electrode, and separator (d) according to Comparative Example 2. Here, it can be seen that, when the stack cell is directly immersed in the acetone solution without cutting, it takes a long time for the stack cell to swell, and it is difficult to immediately separate the negative electrode in the acetone solution.

FIG. 6 below includes images of the side of a stack & folding cell (a), the side of a cut stack & folding cell (b), the side of a cut stack & folding cell exposed to air jet (c), and a positive electrode, a negative electrode, and a separator separated after air jet (d) according to Example 1. Here, it can be confirmed that the negative electrode and the separator laminated thereon may be separated by jetting compressed air onto the stack cell, but separation time is increased due to a folded extra separator.

FIG. 7 below includes images of a stack cell separated into a positive electrode, a separator, and a negative electrode by air jet after being cut in half (a), the positive electrode to which the separator is transferred, collected from the separated stack cell (b), and the negative electrode and the separator collected from the separated stack cell (c) according to Example 2. Here, it can be seen that, by crushing the stack cell, the negative electrode and the separator laminated thereon are easily separated by compressed air acting on the cut surface. By first separating the negative electrode in this way, solvent treatment time may be reduced. In addition, entanglement of the positive electrode, the negative electrode, and the separator during a solvent treatment process may be prevented. In addition, the positive electrode is separated into a positive electrode or a positive electrode/separator combined electrode by air jet.

FIG. 8 below includes images of stack cells treated with an acetone solution after air jet (a, b) and stack cells treated with an acetone solution without air jet (c, d) according to Example 2 and Comparative Example 3, respectively. Here, in the case of a stack cell from which a negative electrode was first separated by air jet, a separator was completely separated 10 minutes after immersion in the acetone solution, and the separated separator was present in a supernatant. However, in the case of a stack cell in which a negative electrode was not first separated by air jet, a separator was separated 60 minutes after immersion in the solution. However, since the separator and the negative electrode were deposited between the positive electrodes, it was difficult to separate the separator and the negative electrode.

FIG. 9 below includes images of a stack cell (a, b), an image of electrode scraps obtained after the stack cell is cut to a size of 3 cm × 3 cm (c), and images of a positive electrode (d) and a negative electrode and separator (e) separated by jetting air onto the electrode scraps according to Example 3. Here, when 300 g of the electrode scraps was separated, in 10 minutes immediately after separation, more than 90 % of the negative electrode was separated, and a portion of the separator was also separated.

FIG. 10 below is an image taken after cutting a stack cell to a size of 1 cm × 1 cm and jetting air onto the cut stack cell according to Example 4. Here, since the size of the electrode scraps was small, many scraps were blown away upon air jet. In addition, since air pressure was not properly applied to the scraps, separation performance was rather deteriorated.

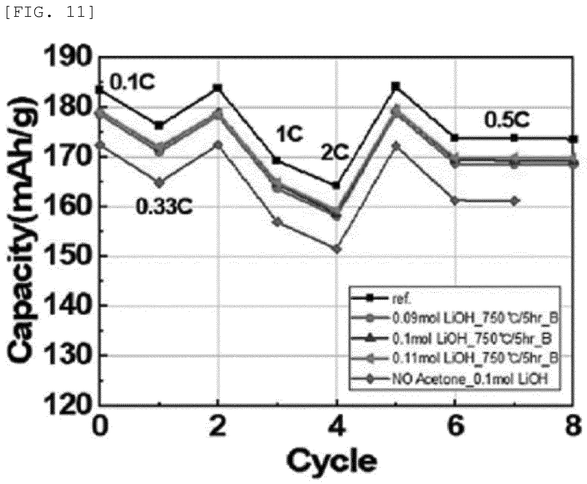

FIG. 11 below shows cell evaluation results for the recycled positive electrode active materials of Examples 5 to 7 and Comparative Example 4 and the positive electrode active material of Reference Example (Reference NCM65), and is a graph showing rate performance depending on the number of cycles. In the graph, rate performance is shown through capacity evaluated according to the number of cycles at different currents. For reference, in the graph of FIG. 11, the horizontal axis is the number of cycles, and the vertical axis is capacity. Here, in the case of Comparative Example 4 in which a positive electrode active material was recycled without a process of immersing, in an acetone solution, a positive electrode to which ceramic was transferred, compared to Examples 5 to 7 in which a positive electrode active material was recycled through a process of immersing in an acetone solution, due to a high content of ceramic in the positive electrode active material, charge/discharge capacity was reduced, showing a charge/discharge capacity of 7 mAh/g or more. This result may be attributed to increase in resistance by ceramic.

## Claims

1. A method of recycling a positive electrode active material, comprising:
step A of fragmenting a waste battery comprising a positive electrode, a separator, and a negative electrode;
step B of removing the negative electrode by jetting compressed air onto waste battery scraps; and
step C of treating the waste battery scraps from which the negative electrode has been removed with a solvent to remove the separator and obtain positive electrode scraps.

2. The method according to claim 1, wherein, in step A, the separator is a ceramic-coated polymer separator.

3. The method according to claim 1, wherein, in step A, the waste battery is a stack-type cell.

4. The method according to claim 1, wherein, in step A, the waste battery scraps have an area of 1 cm² or more.

5. The method according to claim 1, wherein, in step B, compressed air is jetted onto the waste battery scraps to separate the negative electrode, and the separated negative electrode is discharged by centrifugal force.

6. The method according to claim 1, wherein, in step C, the solvent is a mixed solvent containing acetone and an alcohol.

7. The method according to claim 6, wherein the alcohol is ethanol.

8. The method according to claim 6, wherein the mixed solvent has a weight ratio of acetone to the alcohol of 4:6 to 6:4.

9. The method according to claim 1, comprising step D of heat-treating the obtained positive electrode scraps at 300 to 650 °C in air to recover a positive electrode active material.

10. The method according to claim 9, comprising step E of washing the recovered positive electrode active material with water or a basic aqueous lithium compound solution of greater than 0 % by weight and less than or equal to 15 % by weight.

11. The method according to claim 1, wherein the recycled positive electrode active material comprises Al₂O₃ in a concentration of 1 to 10,000 ppm.

12. The method according to claim 4, wherein, in step A, the waste battery scraps have an area of 50 cm² or less.

13. A method of recovering a positive electrode, comprising step A of fragmenting a waste battery comprising a positive electrode, a separator, and a negative electrode; step B of removing the negative electrode by jetting compressed air onto waste battery scraps; and step C of treating the waste battery scraps from which the negative electrode has been removed with a solvent to remove the separator and obtain positive electrode scraps.

## Patentansprüche

1. Verfahren zur Wiederverwertung von Positivelektrodenaktivmaterial, umfassend:
Schritt A des Fragmentierens einer Altbatterie, umfassend eine Positivelektrode, einen Separator und eine Negativelektrode;
Schritt B des Entfernens der Negativelektrode durch Beaufschlagen der Altbatterieabfälle mit Druckluft; und
Schritt C des Behandelns der Altbatteriefragmente, aus denen die Negativelektrode entfernt worden ist, mit einem Lösungsmittel, um den Separator zu entfernen und Positivelektrodenfragmente zu erhalten.

2. Verfahren nach Anspruch 1, wobei, in Schritt A, der Separator ein keramikbeschichteter Polymerseparator ist.

3. Verfahren nach Anspruch 1, wobei, in Schritt A, die Altbatterie eine Stapelzelle ist.

4. Verfahren nach Anspruch 1, wobei, in Schritt A, die Altbatteriefragmente eine Fläche von 1 cm² oder mehr aufweisen.

5. Verfahren nach Anspruch 1, wobei, in Schritt B, die Altbatterieabfälle mit Druckluft beaufschlagt werden, um die Negativelektrode zu trennen, und die getrennte Negativelektrode durch Zentrifugalkraft ausgetragen wird.

6. Verfahren nach Anspruch 1, wobei, in Schritt C, das Lösungsmittel ein Mischlösungsmittel ist, das Aceton und einen Alkohol enthält.

7. Verfahren nach Anspruch 6, wobei es sich bei dem Alkohol um Ethanol handelt.

8. Verfahren nach Anspruch 6, wobei das Mischlösungsmittel ein Gewichtsverhältnis von Aceton zu dem Alkohol von 4:6 bis 6:4 aufweist.

9. Verfahren nach Anspruch 1, umfassend Schritt D des Wärmebehandelns der erhaltenen Positivelektrodenfragmente bei 300 bis 650 °C an der Luft, um ein Positivelektrodenaktivmaterial rückzugewinnen.

10. Verfahren nach Anspruch 9, umfassend Schritt E des Waschens des rückgewonnenen Positivelektrodenaktivmaterials mit Wasser oder einer basischen wässrigen Lithiumverbindungslösung von mehr als 0 Gew.-% und weniger als oder gleich 15 Gew.-%.

11. Verfahren nach Anspruch 1, wobei das wiederverwertete Positivelektrodenaktivmaterial Al₂O₃ in einer Konzentration von 1 bis 10.000 ppm umfasst.

12. Verfahren nach Anspruch 4, wobei, in Schritt A, die Altbatteriefragmente eine Fläche von 50 cm² oder weniger aufweisen.

13. Verfahren zur Rückgewinnung einer Positivelektrode, umfassend Schritt A des Fragmentierens einer Altbatterie, die eine Positivelektrode, einen Separator und eine Negativelektrode aufweist; Schritt B des Entfernens der Negativelektrode durch Beaufschlagen der Altbatterieabfälle mit Druckluft; und Schritt C des Behandelns der Altbatterieabfälle, aus denen die Negativelektrode entfernt worden ist, mit einem Lösungsmittel, um den Separator zu entfernen und Positivelektrodenabfälle zu erhalten.

## Revendications

1. Procédé de recyclage d'un matériau actif d'électrode positive, comprenant :
l'étape A consistant à fragmenter une batterie usagée comprenant une électrode positive, un séparateur et une électrode négative ;
l'étape B consistant à éliminer l'électrode négative par la projection d'air comprimé sur des fragments de batterie usagée ; et
l'étape C consistant à traiter les fragments de batterie usagée dont l'électrode négative a été éliminée avec un solvant pour éliminer le séparateur et obtenir des fragments d'électrode positive.

2. Procédé selon la revendication 1, dans lequel, à l'étape A, le séparateur est un séparateur polymère revêtu de céramique.

3. Procédé selon la revendication 1, dans lequel, à l'étape A, la batterie usagée est une cellule de type à empilement.

4. Procédé selon la revendication 1, dans lequel, à l'étape A, les fragments de batterie usagée présentent une surface de 1 cm² ou plus.

5. Procédé selon la revendication 1, dans lequel, à l'étape B, de l'air comprimé est projeté sur les fragments de batterie usagée pour séparer l'électrode négative, et l'électrode négative séparée est évacuée par force centrifuge.

6. Procédé selon la revendication 1, dans lequel, à l'étape C, le solvant est un solvant mixte contenant de l'acétone et un alcool.

7. Procédé selon la revendication 6, dans lequel l'alcool est de l'éthanol.

8. Procédé selon la revendication 6, dans lequel le solvant mixte présente un rapport en poids de l'acétone à l'alcool de 4:6 à 6:4.

9. Procédé selon la revendication 1, comprenant l'étape D consistant à traiter thermiquement les fragments d'électrode positive obtenus à 300 à 650 °C dans l'air pour récupérer un matériau actif d'électrode positive.

10. Procédé selon la revendication 9, comprenant l'étape E consistant à laver le matériau actif d'électrode positive récupéré avec de l'eau ou avec une solution de composé de lithium aqueux basique supérieure à 0 % en poids et inférieure ou égale à 15 % en poids.

11. Procédé selon la revendication 1, dans lequel le matériau actif d'électrode positive recyclé comprend de l'Al₂O₃ à une concentration de 1 à 10 000 ppm.

12. Procédé selon la revendication 4, dans lequel, à l'étape A, les fragments de batterie usagée présentent une surface de 50 cm² ou moins.

13. Procédé de récupération d'une électrode positive, comprenant l'étape A consistant à fragmenter une batterie usagée comprenant une électrode positive, un séparateur et une électrode négative ; l'étape B consistant à éliminer l'électrode négative par la projection d'air comprimé sur des fragments de batterie usagée ; et l'étape C consistant à traiter les fragments de batterie usagée dont l'électrode négative a été éliminée avec un solvant pour éliminer le séparateur et obtenir des fragments d'électrode positive.
